(19) **Europäisches Patentamt / European Patent Office / Office européen des brevets**

(11) **EP 1 582 006 B1**

(12) **EUROPEAN PATENT SPECIFICATION**

(45) Date of publication and mention of the grant of the patent:
**27.02.2008 Bulletin 2008/09**

(21) Application number: **03778696.9**

(22) Date of filing: **29.12.2003**

(51) Int Cl.:
*H04B 1/707* (2006.01)    *H04J 3/06* (2006.01)
*H04L 7/04* (2006.01)

(86) International application number:
**PCT/IB2003/006248**

(87) International publication number:
**WO 2004/059864 (15.07.2004 Gazette 2004/29)**

(54) **METHOD AND DEVICE TO MAINTAIN SYNCHRONIZATION TRACKING IN TDD WIRELESS COMMUNICATION**

VERFAHREN UND VORRICHTUNG ZUR ERHALTUNG DER SYNCHRONISATION FÜR TDD DRAHTLOSE KOMMUNIKATION

PROCEDE ET DISPOSITIF DE MAINTIEN D'UNE LOCALISATION DE SYNCHRONISATION DANS UNE COMMUNICATION DRT SANS FIL

(84) Designated Contracting States:
**AT BE BG CH CY CZ DE DK EE ES FI FR GB GR HU IE IT LI LU MC NL PT RO SE SI SK TR**

(30) Priority: **30.12.2002 CN 02160462**

(43) Date of publication of application:
**05.10.2005 Bulletin 2005/40**

(73) Proprietor: **NXP B.V.**
**5656 AG Eindhoven (NL)**

(72) Inventors:
• **LIANG, Jingxin,**
  **Philips Electronics China**
  **Shanghai 200070 (CN)**
• **ZHANG, Zhiyu,**
  **Philips Electronics China**
  **Shanghai 200070 (CN)**

(74) Representative: **White, Andrew Gordon et al**
**NXP Semiconductors**
**Intellectual Property Department**
**Cross Oak Lane**
**Redhill, Surrey RH1 5HA (GB)**

(56) References cited:
WO-A-00/64113          WO-A-99/60759
GB-A- 2 371 725        US-A- 5 761 211
US-A1- 2002 172 187

• **MING LEI, YUESHAN XU, PING ZHANG: "Channel estimation based on midamble in ultra-TDD systems" INTERNATIONAL CONFERENCE ON TELECOMMUNICATIONS, ICT'2002, vol. 2, 23 June 2002 (2002-06-23), pages 434-438, XP008028023 Beijing, China**
• **GRIPARIS, KOULAKIOTIS, AGHVAMI: "Channel estimation and tracking techniques for DS-CDMA systems" INTERNATIONAL CONFERENCE ON TELECOMMUNICATIONS, ICT'98, vol. 3, 21 June 1998 (1998-06-21), pages 108-113, XP008028022 Chalkidiki, Greece**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF INVENTION

The present invention relates to a method and a device to maintain synchronisation tracking, in particular to a method and a device in a Time Division Duplex (TDD) wireless communication system.

BACKGROUND OF THE INVENTION

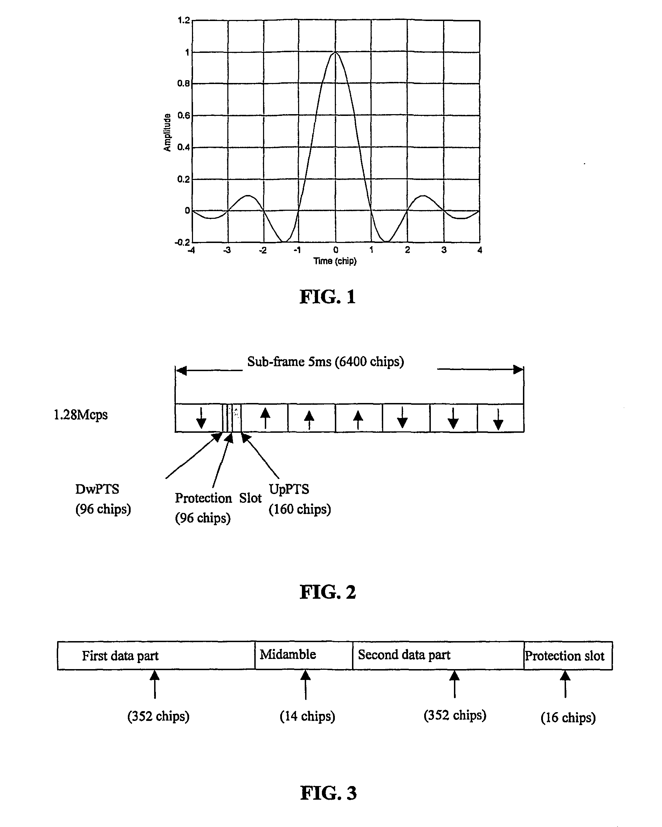

TD-SCDMA (Time Division Synchronous Code Division Multiple Access) is a 3G (Third Generation) standard adopted by International Telecommunications Union (ITU). It takes advantage of Time Division Multiple Access (TDMA) and synchronous Code Division Multiple Access (CDMA), provides high spectrum efficiency and service flexibility. In the TD-SCDMA User Equipment (UE) system, it is very important that a UE is synchronised to the received signal from Node-B. In general, signal synchronisation can be divided into two stages: initial synchronisation and synchronisation tracking. The base of synchronisation is on the chip level. Every chip in Node-B is shaped into an Inter-Symbol Interference (ISI)-free waveform by using a shaping filter, shown in Figure 1 of the accompanying drawings. The waveform function of a Root Raised Cosine (RRC) filter is denoted as f(t). In a UE system, to acquire the maximum SINR (Signal to Interference and Noise Ratio), a UE should sample at the peak of the chip waveform, corresponding to time = 0 in Figure 1. In TD-SCDMA, each radio frame of 10 ms length comprises two sub-frames of 5ms length. The sub-frame format is shown in Figure 2 of the accompanying drawings. In a sub-frame, there are seven common time slots, two special time slots, namely, DwPTS (Downlink Pilot Time Slot) (96 chips) and UpPTS (Uplink Pilot Time Slot) (160 chips), and a protection time slot (96 chips) between the two special time slots. Figure 3 of the accompanying drawings shows the structure of a common time slot. The structure comprises a first data part (352 chips), a midamble (14 chips), a second data part (352 chips) and a protection slot (16 chips). The midamble is used to estimate the radio multi-path and is also quite important in maintaining the downlink synchronisation.

After having acquired synchonisation of the downlink signal, a UE enters into the stage of keeping the synchronisation. Because a UE does not know the exact time offset information between a local timer and the downlink signal from Node-B, traditionally X-times sampling rate is used, here X is an integer larger than 1, for example 2, 4 or even 8. The UE uses a RRC filter to filter the sample stream. The filter output will shape an autocorrelation waveform of a scrambling code related to a SYNC-DL sequence. (SYNC-DL sequences are disclosed in Section 8 of 3GPP TS 25.223 V6.0.0 (2003-12).) The highest peak corresponds to the most likely synchronization point. Using the method, the synchronisation time error will be within $[-T_c/2X, T_c/2X]$, where $T_c$ is the chip period. "Early/late gate" is a commonly seen implementation according to the above theory. Another commonly used synchronisation method is a "$\tau$ dithering loop".

The high value of sample multiple X raises the speed requirement for A/D converter, requires a bigger buffer size and increases the computation complexity. As a consequence the cost of the hardware sytem and the power consumption of the A/D conversion are all increased. To mitigate these increases a smaller sample multiple is better, but if the sample rate multiple is too small, the synchronisation precision will decrease. Typically the sample rate X is set as 4.

WO/0064113 discloses a method of channel estimation in Time Division Multiple Access (TDMA) mobile radio telephone systems in which the receiving values of several bursts are used for channel estimation and for estimating a single channel response when the period during which the successive data bursts are transmitted is significantly smaller than the coherence time. The bursts comprises parts of a multipart training sequence and are transmitted as a midamble or preamble.

SUMMARY OF THE INVENTION

An object of the present invention is to achieve synchronisation precision in a less onerous way compared to known methods.

According to a first aspect of the present invention there is provided a method of maintaining synchronisation tracking in a Time Division Duplex, hereinafter referred to as TDD, code division multiple access wireless communication system in which a primary station node transmits to a terminal of a User Equipment, hereinafter referred to as UE, system, the transmission comprising sub-frames comprising data time slots, the data time slots including a midamble, characterised in that the method of maintaining synchronisation comprises detecting the midamble, dividing the detected midamble into two parts, processing the two parts separately from each other, for each part of the midamble, determining the auto-correlation with the corresponding part of a local midamble and obtaining two auto-correlation peaks, comparing the two auto-correlation peaks with each other, and advancing or retarding a local time base based on the comparison result of the two autocorrelation peaks so that the sampling time point for detecting midamble is:

(n-Ω)Tc, when n is even; and

(n+Ω)Tc, when n is odd,

wherein n is the location of the chip, Ω is a value set lower than 1, and Tc is the time period of the chip.

According to a second aspect of the present invention there is provided a terminal of a User Equipment, hereinafter referred to as UE, system in a Time Division Duplex, hereinafter referred to as TDD, wireless communication system in which a primary station node transmits to the terminal, the transmission comprising sub-frames comprising data time slots, the data time slots including a midamble, characterised in that the terminal comprises means for detecting the midamble, a divider for dividing the sampled midamble into two parts, processing means for detecting the two parts separately from each other, the processing means comprising a dot product means coupled to the divider for effecting an auto-correlation property operation between each of the two parts and a corresponding part of a local midamble, comparing means

coupled to the dot product means for comparing the two auto-correlation peaks with each other, and a local timer coupled to the comparing means, the local timer providing an advance or a retard signal based on the result of the comparison in the comparing means so that the sampling time point for detecting midamble is:

(n-Ω)Tc, when n is even; and

(n+Ω)Tc, when n is odd,

wherein n is the location of the chip, Ω is a value set lower than 1, and Tc is the time period of the chip.

The method in accordance with the present invention provides a new interlaced sampling method to sample the midamble part in a TD-SCDMA time slot, and when the sampling multiple is 1, the system still keeps an acceptable synchronisation tracking performance. When the sampling multiple is 1, namely, when the real offset is within (-Tc/2, Tc/2), rough synchronisation has acquired.

The sample time point for detecting midamble is:

1. when $353 \leq n \leq 496$, if n is even, the sample point is $(n - \Omega)Tc$;
2. when $353 \leq n \leq 496$, if n is odd, the sample point is $(n + \Omega)Tc$.

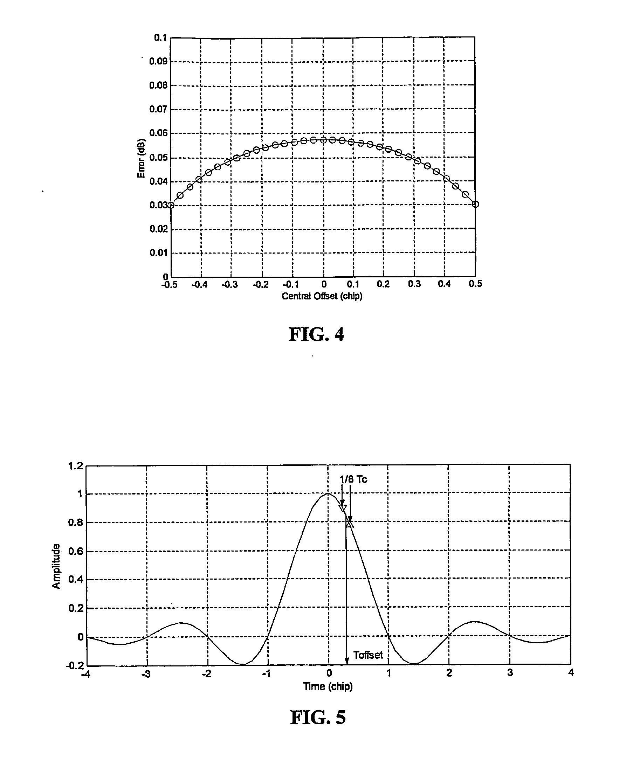

Here the correction factor Ω must be a small value, because Ω is too big, the auto-correlation peak shown in Figure 5 of the accompanying drawings will decrease, which is a disadvntage to channel detecting. The principle is to select Ω as a random value less than ¼. In this way, the time difference between $(n + \Omega)Tc$ and $(n - \Omega)Tc$ is less than half of the chip period, midamble (m1, m2, m3, ....m144) is divided into an odd part (m1, m3, m5, ....M143) and an even part (m2, m4, m6 ...m144). The odd part and the even part of the midamble are detected by using a match filter and obtaining two peaks, then the amplitude of the two peaks is compared. If the latter is higher than the former, the local time is advanced by ΩTc; if the opposite is the case and the former is higher than the latter, the local time is advanced by - ΩTc. The said midamble is also the downlink synchronisation sequence.

If the 16th midamble is taken as an example. By using another signal sequence, the result is the same. As the odd part and the even part have the same auto-correlation sequence and the peak is half of the auto-correlation peak of the entire signal sequence, assume the sampling offset is r. Under adopting normal sampling method, the peak of the midamble auto-correlation is directly proportional to $f(\tau)$, however, under adopting the interlaced sampling method in accordance with the present invention, the peak of the midamble auto-correlation is proportional to $[f(\tau + \Omega) + f(\tau - \Omega)]/2$, so the normalized error of channel detecting induced by interlaced-sampling will be about :

$$2f(\tau) / [f(\tau + \Omega) + f(\tau - \Omega)], \ -Tc/2 < \tau < Tc/2 \qquad (1)$$

As can be seen, the both are nearly the same except that the peak amplitude of the latter one is a little lower than the former one. Compared with the normal method, the new interlaced-sampling method will only harm SNR (Signal to Noise Ratio) of channel detecting very slightly using midamble. By using the method in accordance with the present invention, the sample frequency can be decreased to only one times the chip rate and TD-SCDMA can still maintain the ability to track the downlink synchronisation. In this way, it can be allowed to adopt cheaper A/D converter and to reduce the size of the buffer size greatly. The tracking error can be mostly within [-Tc/16, Tc/16], which is the same error when adopting the normal method and X = 8.

BRIEF DESCRIPTION OF THE DRAWING FIGURES

The present invention will now be described, by way of example, with reference to the accompanying drawings, wherein:

Figure 1 shows a RRC shaping filter response,
Figure 2 illustrates the structure of a TDSCDMA sub-frame,
Figure 3 illustrates the structure of a common time slot of the sub-frame shown in Figure 2,
Figure 4 is a graph illustrating the error of channel estimation with interlaced midamble,
Figure 5 is a RRC filter shaping response showing the sampling point offset of current data parts,
Figure 6 is a block schematic diagram of an embodiment of the invention implemented in a device for downlink sychronisation tracking in a TDD wireless communication system, and
Figure 7 is a block schematic diagram of a triggering mechanism for use in the embodiment of the present invention illustrated in Figure 6.

DETAILED DESCRIPTION OF THE INVENTION

As Figure 1, to 3 have been described already, in the interests of brevity they will not described again.
In initial designing, $\Omega$ is set as 1/16. By controlling the triggering pulse to an A/D converter, the sampling time points for all 864 chips in a time slot are:

1. when $1 \leq n \leq 352$, the sampling time point is $nTc$;

2. when $353 \leq n \leq 496$, if n is even, the sampling time point is $nT_c$;

3. when $353 \leq n \leq 496$, if n is odd, the sampling time point is $nT_c$;

4. when $497 \leq n \leq 864$, the sampling time point is $nT_c$.

The said n is chip location, the said $\Omega$ is random value less than 1/4, the said $T_c$ is chip period. In the example, the said midamble is midamble. The midamble {m1, m2, m3, ... m144} is divided into odd part {m1, m3, m5, ... m143} and even part { m2, m4, m6, ... m144 } . Detect the odd part and the even part of midamble using match filter and obtain two peaks, then compare the two peaks amplitude. If the latter (even part) is higher than the former (odd part), advance the local timer by Tc/16; in contrast, if the former is higher than the latter, advance the timer by $-T_c/16$; said signals sequence can be midamble, also downlink synchronization sequence.
According to above method, because the peak of the auto-correlation of odd part (and even part) has only half the amplitude of that of entire midamble, in noisy environment, the SNR of the odd part (and even part) is 3 dB lower than that of entire midamble. This may lead to more errors in comparison of auto-correlation peak amplitude of odd part and even part. Next, an example will be taken to explain the feasibility of the invention method.
Assume that one vehicle runs at 120km/hr and moves 0.167m in every sub-frame time (5ms). When the distance between UE and Node-B is changed because of movement, UE should advance/retard local downlink timer by $T_c/16$ (chip rate is 1.28M, $T_c$=781ns). In period time $T_c/16$, wireless wave can transmit a distance of 14.5m at 300,000km/s, which means: if UE really need advance/retard local downlink timer because of movement, it can make decision after comparing auto-correlation peak of odd part and even part in as many as [14.65/0.167] = 87 sub-frames. There are at least two downlink time slots in one sub-frame, so in 87 sub-frames there are at least 174 usable midambles to be decided. This makes possible a nearly error-free decision.
According to the above deduction, there can be as many as 174 comparison results. If more than [174(1 + $\Delta$) /2] = $N_T$ results are positive, the local timer advances Tc/16; on the contrary, the local timer retards Tc/16. Here [•] means that the integer is no greater than. If there are not more than $N_T$ positive or negative comparison results, the local timer remains unchanged. Here $\Delta$ is a protection margin which is used to avoid unnecessary dithering of the local timer (in the following mathematical analysis, $\Delta$ is set as 0.1).
When the speed of a vehicle is lower than 120km/hr, UE can compare auto-correlation peaks of more than 174 odd and even parts before making a decision. This leads to an improved performance.
Referring to Figure 5, $\Delta$ marks an odd sampling point, $\nabla$ marks an even sampling point. Assume that the sampling point of a current data part has an offset $T_{offset}$, -Tc/2 < $T_{offset}$ < Tc/2, then correct tracking will be obtained by advancing the local timer by $\pm$ Tc/16 towards the correct direction. So correct tracking is the important precondition of implementing the method in accordance with the present invention.
In the analysis, maybe selected parameters are not the best (such as the value of $\Delta$, the interlaced offset $\Omega$

and the adjustment step Tc/16 etc.), but in a real environment they can be tuned to perform better.

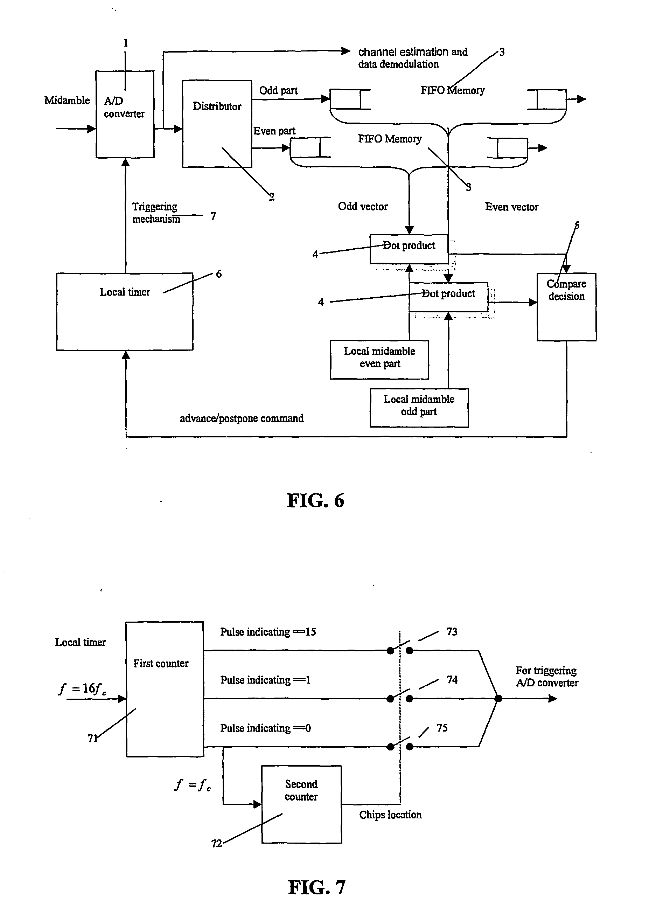

Referring to Figure 6, a device for downlink synchronisation tracking in a TDD wireless system comprises an analog to digital (A/D) converter 1 to convert analog midamble signals to digitised midamble signals. An output of the A/D converter 1 is coupled to a distributor 2 in which the digitised midamble signals are divided into odd and even parts. The odd and even parts are applied to respective FIFO memories 3 which temporarily store the signals received from the distributor 2. Each of the FIFO memories is connected to a respective dot product stage 4 which implements an auto-correlation operation on the odd part and the even part of the midamble stored in the FIFO memories and respectively corresponding part of the local midamble stored in memories having outputs connected respectively to the dot product stages 4. Outputs of the dot product stages 4 are applied to respective inputs of a decision stage 5 in which the auto-correlation peaks of the both parts are compared. An output of the decision stage 5 is coupled to a local timer 6 by an advance/postpone command line. The local timer 6 advances or retards the sampling instant of the A/D converter 1 according the results of the decision stage 5. Output signals from the local timer 6 are used to trigger the A/D converter 1 by way of a triggering mechanism 7.

Figure 7 shows an embodiment of the triggering mechanism 7 for downlink synchronisation tracking in TDD wireless communication. The triggering mechanism 7 includes a first, hexadecimal counter 71 coupled to receive a signal having a frequency equal to 16 times the chip frequency $f_c$, that is, 16 $f_c$. The first counter 71 has three outputs, one for each of the pulse indications 15, 1 and 0. Each of the pulse indication outputs 15, 1, 0 is connected to one side of a respective switch 73, 74, and 75. The other side of each of the switches 73, 74 and 75 is connected to a junction connected to the trigger input of the A/D converter 1 (Figure 6). The pulse indication output 0, which has a frequency equal to $f_c$, is also connected to a second counter 72 which has an output providing chip location indications for operating the switches 73, 74 and 75.

In operation the switches are turned-on and turned-off according to the pulse indication of the first, hexadecimal counter 71 and the location indication of the second counter 72. When the pulse indication is 15, the chip location indication is 353-496 and is even, the first switch 73 closes; when the pulse indication is 1, the chip location is 353-496 and is odd, the second switch 74 closes; and when the pulse indication is 0, chip location is 1~352 or 497~864 and the third switch 75 closes.

The present invention is not limited to the above illustrated and described method and device. The device shown in Figures 6 and 7 may also be implemented partly in software, such as the midamble can also be divided into two parts using other methods. Accordingly all the technical variants known by a person skilled in the field should fall within the scope of the invention as claimed.

**Claims**

1. A method of maintaining synchronisation tracking in a Time Division Duplex, hereinafter referred to as TDD, code division multiple access wireless communication system in which a primary station node transmits to a terminal of a User Equipment, hereinafter referred to as UE, system, the transmission comprising sub-frames comprising data time slots, the data time slots including a midamble, **characterised in that** the method of maintaining synchronisation comprises detecting the midamble, dividing (2) the detected midamble into two parts, processing the two parts separately from each other, for each part of the midamble, determining (4) the auto-correlation with the corresponding part of a local midamble and obtaining two auto-correlation peaks, comparing (5) the two auto-correlation peaks with each other, and advancing or retarding a local time base (6) based on the comparison result of the two auto-correlation peaks so that the sampling time point for detecting midamble is:

   $(n-\Omega)Tc$, when n is even; and
   $(n+\Omega)Tc$, when n is odd,

   wherein n is the location of the chip, $\Omega$ is a value set lower than 1, and Tc is the time period of the chip.

2. A method as claimed in claim 1, wherein the wireless communication system is a Time Division Synchronous Code Division Multiple Access, hereinafter referred to as TD-SCDMA, system, **characterised in that** the midamble is sampled at one times the chip rate of the TD-SCDMA system.

3. A method as claimed in claim 1, **characterised in that** the midamble is divided into two parts having the same length.

4. A method as claimed in claim 2, **characterised in that** the midamble is divided into two parts by separating even and odd chips, as to obtain a midamble even part containing the even chips and a midamble odd part containing the odd chips.

5. A method as claimed in claim 4, **characterised in that** if the peak amplitude of the even part is higher than the peak amplitude of the odd part, the local timer (6) is advanced by +Tc/16, and if the peak amplitude of the odd part is higher than the peak amplitude of the even part the local timer is advanced by -Tc/16.

6. A method as claimed in claim 4, **characterised in that** when the distance between UE and the primary station node is changed because of the movement, the UE can make a decision after comparing the auto-correlation peaks of the odd part and the even part in a plurality of M sub-frames to provide as many as M comparison results, and **in that** if the positive results are more than a set value, then the local timer (6) advances by $\Omega$Tc, and on the contrary, if the negative results are more than a set value, the local timer retards by $\Omega$Tc.

7. A method as claimed in claim 6, **characterised in that** if neither the number of positive or negative results is more than a set value, the local time (6) remains unchanged.

8. A method as claimed in claim 6 or 7, **characterised in that** the set value is $\left[ M(1+\Delta)\Big/2 \right]$, where $\Delta$ is a protection margin.

9. A method as claimed in any one of claims 1 to 8, **characterised in that** $\Omega$ is lower than ¼.

10. A method as claimed in claim 8, **characterised in that** $\Delta$ is 0.1.

11. A method as claimed in any one of claims 1 to 10, **characterised in that** the midamble is the downlink synchronisation.

12. A terminal of a User Equipment, hereinafter referred to as UE, system in a Time Division Duplex, hereinafter referred to as TDD, wireless communication system in which a primary station node transmits to the terminal, the transmission comprising sub-frames comprising data time slots, the data time slots including a midamble, **characterised in that** the terminal comprises means (1) for detecting the midamble, a divider (2) for dividing the sampled midamble into two parts, processing means for detecting the two parts separately from each other, the processing means comprising a dot product means (4) coupled to the divider for effecting an auto-correlation property operation between each of the two parts and a corresponding part of a local midamble, comparing means (5) coupled to the dot product means for comparing the two auto-correlation peaks with each other, and a local timer (6) coupled to the comparing means, the local timer providing an advance or a retard signal based on the result of the comparison in the comparing means so that the sampling time point for detecting midamble is:

    (n-$\Omega$)Tc, when n is even; and
    (n+$\Omega$)Tc, when n is odd,

    wherein n is the location of the chip, $\Omega$ is a value set lower than 1, and Tc is the time period of the chip.

13. A terminal as claimed in claim 12, **characterised in that** the divider is adapted to divide the midamble into two parts having the same length.

14. A terminal as claimed in claim 12 or 13, **characterised in that** the divider is adapted to divide the midamble into an odd part and an even part.

15. A terminal as claimed in claim 14, **characterised in that** the comparing means is adapted to produce the following outputs: if the peak amplitude of the even part is higher than the peak amplitude of the odd part, advance the local timer (6) by $\Omega$Tc, if the peak amplitude of the odd part is higher than the peak amplitude of the even part, advance the local timer by $\Omega$Tc, wherein $\Omega$ has a value set lower than 1, and Tc is the duration of the chip.

16. A terminal as claimed in any one of claims 12 to 15, **characterised in that** the midamble is the downlink synchronisation.

17. A terminal as claimed in claim 15, **characterised in that** $\Omega$ is lower than ¼.

**Patentansprüche**

1. Verfahren zur Aufrechterhaltung der Synchronisationsnachführung in einem Zeitduplex-Codemultiplex-Funkkommunikationssystem, im Folgenden als TDD-Codemultiplex-Funkkommunikationssystem bezeichnet, in welchem ein Primärstationsknoten zu einem Endgerät eines Benutzerausrüstungssystems, im Folgenden als UE-System bezeichnet, sendet, wobei die Übermittlung Unterrahmen umfasst, die Datenzeitschlitze umfassen, wobei die Datenzeitschlitze einen Zwischenspann enthalten, **dadurch gekennzeichnet, dass** das Verfahren der Aufrechterhaltung der Synchronisation umfasst: Erfassen des Zwischenspanns, Unterteilen (2) des erfassten Zwischenspanns in zwei Teile, Verarbeiten der zwei Teile getrennt voneinander für jeden Teil des Zwischenspanns, Bestimmen (4) der Autokorrelation mit dem entsprechenden Teil eines lokalen Zwischenspanns und Erhalten zweier Autokorrelationsspitzen, Vergleichen (5) der zwei Autokorrelationsspitzen miteinander, und Vorrücken oder Verzögern einer lokalen Zeitbasis (6) auf der Grundlage des Vergleichsergebnisses der zwei Autokorrelationsspitzen, so dass der Abtastzeitpunkt für die Erfassung des Zwischenspanns ist:

   $(n - \Omega)Tc$, wenn n gerade ist; und
   $(n + \Omega)Tc$, wenn n ungerade ist,

   wobei n der Ort des Chips ist, $\Omega$ ein Wert ist, der kleiner als 1 gesetzt ist, und Tc die Zeitperiode des Chips ist.

2. Verfahren nach Anspruch 1, wobei das Funkkommunikationssystem ein Zeitsynchron-Codemultiplex-System ist, im Folgenden als TD-SCDMA-System bezeichnet, **dadurch gekennzeichnet, dass** der Zwischenspann mit Eins mal der Chiprate des TD-SCDMA-Systems abgetastet wird.

3. Verfahren nach Anspruch 1, **dadurch gekennzeichnet, dass** der Zwischenspann in zwei Teile mit gleicher Länge unterteilt wird.

4. Verfahren nach Anspruch 2, **dadurch gekennzeichnet, dass** der Zwischenspann durch Trennen gerader und ungerader Chips in zwei Teile unterteilt wird, um einen geraden Zwischenspannabschnitt, der die geraden Chips enthält, und einen ungeraden Zwischenspannabschnitt, der die ungeraden Chips enthält, zu erhalten.

5. Verfahren nach Anspruch 4, **dadurch gekennzeichnet, dass** dann, wenn die Spitzenamplitude des geraden Teils höher ist als die Spitzenamplitude des ungeraden Teils, der lokale Zeitgeber (6) um +Tc/16 vorgerückt wird, und dann, wenn die Spitzenamplitude des ungeraden Teils höher ist als die Spitzenamplitude des geraden Teils, der lokale Zeitgeber um -Tc/16 vorgerückt wird.

6. Verfahren nach Anspruch 4, **dadurch gekennzeichnet, dass** dann, wenn der Abstand zwischen UE und dem primären Stationsknoten aufgrund der Bewegung verändert wird, die UE nach Vergleichen der Autokorrelationsspitzen des ungeraden Teils und des geraden Teils in mehreren von M Unterrahmen eine Entscheidung treffen kann, nicht weniger als M Vergleichsergebnisse bereitzustellen, und dass dann, wenn die positiven Ergebnisse mehr als ein festgesetzter Wert sind, der lokale Zeitgeber (6) um $\Omega Tc$ vorrückt, wobei im Gegensatz dazu dann, wenn die negativen Ergebnisse mehr sind als ein festgesetzter Wert, der lokale Zeitgeber um $\Omega Tc$ verzögert wird.

7. Verfahren nach Anspruch 6, **dadurch gekennzeichnet, dass** dann, wenn weder die Anzahl der positiven noch der negativen Ergebnisse größer als ein festgesetzter Wert ist, der lokale Zeitgeber (6) unverändert bleibt.

8. Verfahren nach Anspruch 6 oder 7, **dadurch gekennzeichnet, dass** der festgesetzte Wert gleich $[M(1 + \Delta)/2]$ ist, wobei $\Delta$ eine Schutztoleranz ist.

9. Verfahren nach irgendeinem der Ansprüche 1 bis 8, **dadurch gekennzeichnet, dass** $\Omega$ kleiner als 1/4 ist.

10. Verfahren nach Anspruch 8, **dadurch gekennzeichnet, dass** $\Delta$ gleich 0,1 ist.

11. Verfahren nach irgendeinem der Ansprüche 1 bis 10, **dadurch gekennzeichnet, dass** der Zwischenspann die Abwärtsverbindungssynchronisation ist.

12. Endgerät eines Benutzerausrüstungssystems, im Folgenden als UE-System bezeichnet, in einem Zeitduplex-Funkkommunikationssystem, im Folgenden als TDD-Kommunikationssystem bezeichnet, in welchem ein Primärstationsknoten zum Endgerät sendet, wobei die Übermittlung Unterrahmen umfasst, die Datenzeitschlitze umfassen, wobei die Datenzeitschlitze einen Zwischenspann enthalten, **dadurch gekennzeichnet, dass** das Endgerät umfasst: Mittel (1) zum Erfassen des Zwischenspanns, einen Teiler (2) zum Unterteilen des abgetasteten Zwischenspanns in zwei Teile, Verarbeitungsmittel zum Erfassen der zwei Teile getrennt voneinander, wobei das Verarbeitungsmittel ein Punktproduktmittel (4) umfasst, das mit dem Teiler gekoppelt ist, um eine Autokorrelationseigenschaftsoperation zwischen jedem der zwei Teile und einem entsprechenden Teil eines lokalen Zwischenspanns zu bewirken, Vergleichsmittel (5), die mit dem Punktproduktmittel gekoppelt sind, um die zwei Autokorrelationsspitzen miteinander zu vergleichen, und einen lokalen Zeitgeber (6), der mit dem Vergleichsmittel gekoppelt ist, wobei der lokale Zeitgeber auf der Grundlage des Ergebnisses des Vergleichs im Vergleichsmittel ein Vorrück- oder Verzögerungssignal bereitstellt, so dass der Abtastzeitpunkt für die Erfassung des Zwischenspanns ist:

$(n - \Omega)Tc$, wenn n gerade ist; und
$(n + \Omega)Tc$, wenn n ungerade ist,

wobei n der Ort des Chips ist, $\Omega$ ein Wert ist, der kleiner als 1 gesetzt ist, und Tc die Zeitperiode des Chips ist.

13. Endgerät nach Anspruch 12, **dadurch gekennzeichnet, dass** der Teiler dafür ausgelegt ist, den Zwischenspann in zwei Teile mit gleicher Länge zu unterteilen.

14. Endgerät nach Anspruch 12 oder 13, **dadurch gekennzeichnet, dass** der Teiler dafür ausgelegt ist, den Zwischenspann in einen ungeraden Teil und einen geraden Teil zu unterteilen.

15. Endgerät nach Anspruch 14, **dadurch gekennzeichnet, dass** das Vergleichsmittel dafür ausgelegt ist, die folgenden Ausgangssignale zu erzeugen: Vorrücken des lokalen Zeitgebers (6) um $\Omega Tc$, wenn die Spitzenamplitude des geraden Teils höher ist als die Spitzenamplitude des ungeraden Teils, und Vorrücken des lokalen Zeitgebers um $\Omega Tc$, wenn die Spitzenamplitude des ungeraden Teils höher ist als die Spitzenamplitude des geraden Teils, wobei W einen Wert aufweist, der kleiner als 1 gesetzt ist, und Tc die Dauer des Chips ist.

16. Endgerät nach irgendeinem der Ansprüche 12 bis 15, **dadurch gekennzeichnet, dass** der Zwischenspann die Downlink-Synchronisation ist.

17. Endgerät nach Anspruch 15, **dadurch gekennzeichnet, dass** $\Omega$ kleiner als 1/4 ist.

**Revendications**

1. Procédé pour maintenir la poursuite d'une synchronisation dans un système de communication sans fil à accès multiple par répartition en code duplex à répartition dans le temps, appelé ci-dessous DRT, dans lequel un noeud de station primaire transmet à un terminal d'un système d'équipement utilisateur, appelé ci-dessous UE, la transmission comprenant des sous-trames comprenant des fenêtres temporelles de données, les fenêtres temporelles de données comprenant un midambule, **caractérisé en ce que** le procédé de maintien de la synchronisation comprend la détection du midambule, la division (2) du midambule détecté en deux parties, le traitement des deux parties séparément l'une de l'autre, pour chaque partie du midambule, la détermination (4) de l'auto-corrélation avec la partie correspondante d'un midambule local et l'obtention de pics d'auto-corrélation, la comparaison (5) des deux pics d'auto-corrélation entre eux, et l'avancement ou le retardement de la base de temps locale (6) sur la base du résultat de la comparaison des deux pics d'auto-corrélation de sorte que le moment d'échantillonnage pour la détection du midambule soit :

$(n - \Omega) Tc$, lorsque n est pair ; et
$(n + \Omega)Tc$, lorsque n est impair,

où n est l'emplacement de la bribe, $\Omega$ est un ensemble de valeurs inférieur à 1, et où Tc est la durée de la bribe.

2. Procédé selon la revendication 1, dans lequel le système de communication sans fil est un accès multiple par répartition en code synchrone à répartition dans le temps, appelé ci-dessous système TD-SCDMA, **caractérisé en ce que** le midambule est échantillonné à une fois la vitesse de la bribe du système TD-SCDMA.

3. Procédé selon la revendication 1, **caractérisé en ce que** le midambule est divisé en deux parties ayant la même longueur.

**4.** Procédé selon la revendication 2, **caractérisé en ce que** le midambule est divisé en deux parties en séparant les bribes paires et impaires pour obtenir une partie paire de midambule contenant les bribes paires et une partie impaire de midambule contenant les bribes impaires.

**5.** Procédé selon la revendication 4, **caractérisé en ce que** si l'amplitude maximale de la partie paire est supérieure à l'amplitude maximale de la partie impaire, le temporisateur local (6) est avancé de +Tc/16, et si l'amplitude maximale de la partie impaire est supérieure à l'amplitude maximale de la partie paire, le temporisateur local est avancé de -Tc/16.

**6.** Procédé selon la revendication 4, **caractérisé en ce que** lorsque la distance entre UE et le noeud de station primaire est modifiée en raison du mouvement, l'UE peut prendre une décision après avoir comparé les pics d'auto-corrélation de la partie impaire et de la partie paire d'une pluralité de sous-trames M pour obtenir autant de résultats de comparaison M, et **en ce que** si les résultats positifs sont supérieurs à une valeur fixée, alors le temporisateur local (6) avance de $\Omega Tc$, et à l'inverse, si les résultats négatifs sont supérieurs à une valeur fixée, le temporisateur local retarde de $\Omega Tc$.

**7.** Procédé selon la revendication 6, **caractérisé en ce que** si ni le nombre de résultats positifs ni le nombre de résultats négatifs n'est supérieur à une valeur fixée, le temporisateur local (6) reste inchangé.

**8.** Procédé selon la revendication 6 ou 7, **caractérisé en ce que** la valeur fixée est $[M(1+\Delta)_{/2}]$ où $\Delta$ est une marge de protection.

**9.** Procédé selon l'une quelconque des revendications 1 à 8, **caractérisé en ce que** $\Omega$ est inférieur à 1/4.

**10.** Procédé selon la revendication 8, **caractérisé en ce que** $\Delta$ vaut 0,1.

**11.** Procédé selon l'une quelconque des revendications 1 à 10, **caractérisé en ce que** le midambule est la synchronisation en liaison descendante.

**12.** Terminal d'un équipement utilisateur, appelé ci-dessous système UE, dans un système de communication sans fil duplex à répartition dans le temps, appelé ci-dessous DRT, dans lequel un noeud de station primaire transmet au terminal la transmission comprenant des sous-trames comprenant des fenêtres temporelles de données, les fenêtres temporelles de données comprenant un midambule, **caractérisé en ce que** le terminal comprend un moyen (1) pour détecter le midambule, un diviseur (2) pour diviser le midambule échantillonné en deux parties, un moyen de traitement pour détecter les deux parties séparément l'une de l'autre, le moyen de traitement comprenant un moyen de produit scalaire (4) couplé au diviseur pour réaliser une opération de propriété d'auto-corrélation entre chacune des deux parties et une partie correspondante d'un midambule local, un moyen de comparaison (5) couplé au moyen de produit scalaire pour comparer les deux pics d'auto-corrélation l'un avec l'autre, et un temporisateur local (6) couplé au moyen de comparaison, le temporisateur local appliquant un signal d'avance ou un signal de retard sur la base du résultat de la comparaison du moyen de comparaison de sorte que le moment d'échantillonnage pour la détection du midambule soit:

$(n - \Omega)$ Tc, lorsque n est pair ; et
$(n + \Omega)$ Tc, lorsque n est impair,

où n est l'emplacement de la bribe, $\Omega$ est un ensemble de valeurs inférieur à 1, et où Tc est la durée de la bribe.

**13.** Terminal selon la revendication 12, **caractérisé en ce que** le diviseur est conçu pour diviser le midambule en deux parties ayant la même longueur.

**14.** Terminal selon la revendication 12 ou 13, **caractérisé en ce que** le diviseur est conçu pour diviser le midambule en une partie impaire et une partie paire.

**15.** Terminal selon la revendication 14, **caractérisé en ce que** le moyen de comparaison est conçu pour produire les sorties suivantes : si l'amplitude maximale de la partie paire est supérieure à l'amplitude maximale de la partie impaire, avancer le temporisateur local (6) de $\Omega Tc$, si l'amplitude maximale de la partie impaire est supérieure à l'amplitude maximale de la partie paire, avancer le temporisateur local de $\Omega Tc$, où $\Omega$ a un ensemble de valeurs inférieur à 1, et où Tc est la durée de la bribe.

**16.** Terminal selon l'une quelconque des revendications 12 à 15, **caractérisé en ce que** le midambule est la synchronisation en liaison descendante.

**17.** Terminal selon la revendication 15, **caractérisé en ce que** $\Omega$ est inférieur à 1/4.

**FIG. 1**

**FIG. 2**

**FIG. 3**

**FIG. 4**

**FIG. 5**

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0064113 A